(19) Europäisches Patentamt
European Patent Office
Office européen des brevets

(11) **EP 2 875 548 B1**

(12) **FASCICULE DE BREVET EUROPEEN**

(45) Date de publication et mention de la délivrance du brevet:
**15.06.2016 Bulletin 2016/24**

(21) Numéro de dépôt: **13739672.7**

(22) Date de dépôt: **18.07.2013**

(51) Int Cl.:
*H01M 10/08* (2006.01)

(86) Numéro de dépôt international:
**PCT/EP2013/065151**

(87) Numéro de publication internationale:
**WO 2014/013004 (23.01.2014 Gazette 2014/04)**

(54) **ACCUMULATEUR ELECTROCHIMIQUE AU PLOMB COMPRENANT UN ADDITIF D'ELECTROLYTE SPECIFIQUE**

ELEKTROCHEMISCHE BLEIBATTERIE MIT EINEM SPEZIFISCHEN ZUSATZSTOFF

ELECTROCHEMICAL LEAD BATTERY INCLUDING A SPECIFIC ADDITIVE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.07.2012 FR 1257084**

(43) Date de publication de la demande:
**27.05.2015 Bulletin 2015/22**

(73) Titulaires:
  • **Commissariat à l'Énergie Atomique et aux Énergies Alternatives**
    **75015 Paris (FR)**
  • **Institut Polytechnique de Grenoble**
    **38000 Grenoble (FR)**

(72) Inventeurs:
  • **OURY, Alexandre**
    **73000 Chambéry (FR)**
  • **BULTEL, Yann**
    **F-38340 Voreppe (FR)**
  • **KIRCHEV, Angel Zhivkov**
    **F-73100 Aix les Bains (FR)**

(74) Mandataire: **Brevalex**
    **95, rue d'Amsterdam**
    **75378 Paris Cedex 8 (FR)**

(56) Documents cités:
    **WO-A1-2004/101860**

EP 2 875 548 B1

## Description

### DOMAINE TECHNIQUE

La présente invention a trait à un accumulateur électrochimique au plomb comprenant, dans son électrolyte, un additif spécifique destiné, entre autres, à améliorer la tenue du dioxyde de plomb présent à la surface de l'électrode positive.

La présente invention peut trouver application dans tous les domaines nécessitant de stocker de l'énergie électrique, en vue de la restituer pour un usage ultérieur, comme, par exemple, le domaine du stockage stationnaire de l'électricité.

### ÉTAT DE LA TECHNIQUE ANTÉRIEURE

Les accumulateurs électrochimiques au plomb traditionnels comprennent un ensemble de cellules unitaires montées en série comprenant chacune un couple d'électrodes, respectivement une électrode positive et une électrode négative, lesquelles électrodes sont isolées l'une de l'autre par un séparateur poreux comprenant un électrolyte.

Les électrodes susmentionnées sont classiquement formées d'une grille en alliage de plomb, dont les cavités sont remplies d'une pâte poreuse :

- de l'oxyde de plomb $PbO_2$ pour l'électrode positive ; et
- du plomb métallique Pb pour l'électrode négative,

tandis que l'électrolyte consiste en une solution diluée d'acide sulfurique.

Dans les accumulateurs au plomb classiques, une faible fraction du plomb est utilisée pour le stockage du courant (environ 30%) et la structure des électrodes est amenée à se dégrader, après une certaine longévité de l'accumulateur, ce qui le rend, à terme, inutilisable.

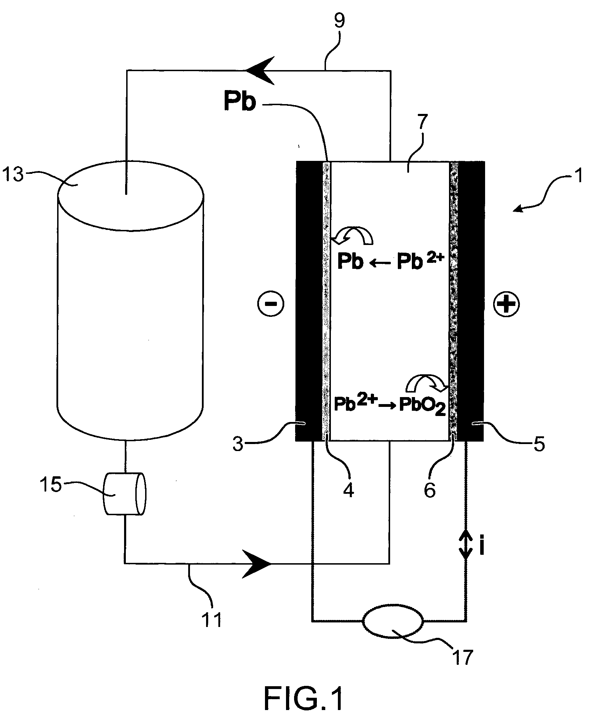

Pour contourner ces inconvénients, certains auteurs, comme Hazza et al., Phys.Chem. Chem. Phys., 6 (2004), 1773, ont proposé une nouvelle technologie d'accumulateur électrochimique au plomb basée sur la circulation d'un électrolyte spécifique : une solution d'acide méthanesulfonique $CH_3SO_3H$ (symbolisé, classiquement, par l'abréviation AMS) comprenant, comme sel de plomb, du méthanesulfonate de plomb $Pb(CH_3SO_3)_2$. Ce type de technologie est représenté sur la figure 1, jointe en annexe, qui illustre une cellule 1 d'accumulateur comprenant une électrode négative 3 (recouverte sur une face d'une couche 4 de plomb métallique) et une électrode positive 5 (recouverte sur une face d'une couche 6 en $PbO_2$) disposées de part et d'autre d'un électrolyte 7 tel que défini ci-dessus, cet électrolyte étant relié, *via* des conduites 9 et 11, à un réservoir 13 comprenant cet électrolyte permettant d'alimenter *via* une pompe 15 les électrodes en électrolyte. Les électrodes 3 et 5 sont reliées, quant à elles, à un circuit électrique externe 17, qui est alimenté par les électrons générés lors des réactions électrochimiques se produisant au niveau des électrodes.

D'un point de vue du fonctionnement, lors du processus de charge, les ions $Pb^{2+}$ sont oxydés pour former un dépôt de dioxyde de plomb ($PbO_2$) sur l'électrode positive et réduits pour former un dépôt de plomb métallique sur l'électrode négative. Lors du processus de décharge, ces dépôts sont redissous en ions $Pb^{2+}$ dans l'électrolyte.

Ces processus peuvent être résumés par les équations suivantes :

*à l'électrode positive :

$$PbO_2 + 4H^+ + 2e^- \underset{\text{charge}}{\overset{\text{décharge}}{\rightleftharpoons}} Pb^{2+} + 2H_2O$$

*à l'électrode négative :

$$Pb \underset{\text{charge}}{\overset{\text{décharge}}{\rightleftharpoons}} Pb^{2+} + 2e^-$$

la réaction globale de fonctionnement de l'accumulateur étant ainsi la suivante :

$$PbO_2 + Pb + 4H^+ \xrightarrow[\text{charge}]{\text{décharge}} 2Pb^{2+} + 2H_2O$$

L'avantage de ce type d'accumulateur est la grande solubilité des sels de plomb dans l'AMS (celle-ci pouvant aller jusqu'à 2 M), ce qui permet de stocker une grande quantité de Pb (II) à l'état soluble. Qui plus est, ce type d'accumulateur ne nécessite pas l'utilisation d'une membrane séparatrice, ce qui présente un avantage en termes de coûts.

Pletcher et al., dans J.Power Sources, 180, (2008), 621 ont également travaillé sur ce type d'accumulateur et notamment sur le choix d'additifs à ajouter à l'électrolyte en vue d'améliorer la qualité du dépôt de plomb à la surface de l'électrode négative. En particulier, ils ont pu mettre en évidence que l'utilisation, dans l'électrolyte, d'un cation hexadécyltriméthylammonium $C_{16}H_{33}(CH_3)_3N^+$, par exemple, à une concentration de 5 mM, permet d'obtenir un dépôt homogène de plomb avec une rugosité sensiblement diminuée, en particulier pour les fortes densités de courant (par exemple, à 50 mA.cm$^{-2}$). Toutefois, il est rapporté la présence, dans l'électrolyte, de fines particules noires de dioxyde de plomb provenant du détachement du dépôt de dioxyde de plomb présent à la surface de l'électrode positive. A défaut de pouvoir être filtrées, ces particules peuvent être à l'origine de la dégradation de la qualité du plomb à l'électrode négative voire peuvent engendrer des courts-circuits entre les électrodes, si elles s'accumulent dans des zones à faible flux d'électrolyte.

Au regard des inconvénients mentionnés ci-dessus, les auteurs de la présente invention se sont donc fixé pour objectif de mettre en place un nouveau type d'accumulateur au plomb fonctionnant avec un électrolyte à base d'AMS et d'un sel de plomb, ce nouveau type permettant, notamment, de diminuer le dépôt de particules de dioxyde de plomb dans l'électrolyte, soit, en d'autres termes, d'améliorer la tenue du dioxyde de plomb $PbO_2$ présent sur l'électrode positive.

## EXPOSÉ DE L'INVENTION

Les auteurs de la présente invention ont découvert, de manière surprenante, qu'en ajoutant un additif spécifique dans l'électrolyte des cellules électrochimiques d'un accumulateur au plomb fonctionnant avec un électrolyte à base d'AMS, il est possible de surmonter les inconvénients des accumulateurs de l'art antérieur de ce type.

Ainsi, l'invention a trait à un accumulateur électrochimique au plomb comprenant au moins une cellule électrochimique comprenant une électrode positive comprenant de l'oxyde de plomb $PbO_2$ et une électrode négative comprenant du plomb métallique séparées par un électrolyte comprenant de l'acide méthanesulfonique et au moins un sel de plomb, caractérisé en ce que ledit électrolyte comprend, en outre, des ions fluorures.

Avant d'entrer plus en détail dans l'exposé de l'invention, nous précisons les définitions suivantes.

Par électrode positive, on entend, classiquement, dans ce qui précède et ce qui suit, l'électrode qui fait office de cathode (soit, en d'autres termes, qui est le siège d'une réduction), quand l'accumulateur débite du courant (c'est-à-dire lorsqu'il est en processus de décharge) et qui fait office d'anode (soit, en d'autres termes, qui est le siège d'une oxydation), lorsque l'accumulateur est en processus de charge.

Par électrode négative, on entend, classiquement, dans ce qui précède et ce qui suit, l'électrode qui fait office d'anode (soit, en d'autres termes, qui est le siège d'une oxydation), quand l'accumulateur débite du courant (c'est-à-dire lorsqu'il est en processus de décharge) et qui fait office de cathode (soit, en d'autres termes, qui est le siège d'une réduction), lorsque l'accumulateur est en processus de charge.

Que ce soit pour l'électrode positive ou pour l'électrode négative, elles peuvent être, toutes deux, des électrodes comprenant un substrat, par exemple, en un matériau conducteur électronique, dont au moins une partie de sa surface est recouverte d'une couche de plomb métallique pour l'électrode négative et d'une couche de dioxyde de plomb $PbO_2$ pour l'électrode positive.

Plus spécifiquement, le substrat susmentionné peut être un substrat carboné, par exemple un substrat en un matériau carboné choisi parmi le carbone vitreux, le graphite et les mélanges de ceux-ci. Il peut s'agit également de tout autre matériau carboné conducteur électronique que ceux listés explicitement ci-dessus.

D'un point de vue géométrique, ce substrat peut se présenter sous forme d'une plaque plane ou d'une plaque présentant, sur au moins une de ses faces et, en particulier, sur la face destinée à être en contact avec l'électrolyte, des motifs en relief.

Comme mentionné ci-dessus, l'électrolyte comprend de l'acide méthanesulfonique, au moins un sel de plomb et des ions fluorures.

Avantageusement, le sel de plomb est du méthanesulfonate de plomb $Pb(CH_3SO_3)_2$, la solubilité de ce sel étant particulièrement importante dans l'acide méthanesulfonique et pouvant être incorporé dans cet acide jusqu'à 2 M.

L'électrolyte comprenant du méthanesulfonate de plomb $Pb(CH_3SO_3)_2$ et de l'acide méthanesulfonique peut être préparé :

- par ajout direct de méthanesulfonate de plomb dans de l'acide méthanesulfonique ; ou
- par dissolution d'oxyde de plomb (PbO) ou de carbonate de plomb (PbCO$_3$) dans l'acide méthanesulfonique, une partie de cet acide réagissant avec l'oxyde de plomb pour former de l'eau et du méthanesulfonate de plomb ou réagissant avec le carbonate de plomb pour former de l'eau, du dioxyde de carbone et du méthanesulfonate de plomb.

Les ions fluorures, quant à eux, sont issus classiquement de l'addition à l'électrolyte d'un sel fluorure, par exemple, un sel fluorure d'un élément alcalin, tel que le fluorure de sodium NaF.

Les ions fluorures sont, avantageusement, présents en une quantité inférieure à celle nécessaire à la précipitation des ions Pb$^{2+}$ pour former du PbF$_2$ et en une quantité efficace pour éviter un décollement du PbO$_2$ présent à la surface de l'électrode positive. En effet, la formation de PbF$_2$ se caractérise par un précipité blanc, qui trouble l'électrolyte et, qui plus est, limite la quantité d'ions F$^-$ présents en solution.

L'homme du métier pourra choisir, de façon appropriée, cette quantité, en pratiquant des essais expérimentaux simples.

Par exemple, lorsque les ions fluorures sont issus de la dissolution de NaF, en partant d'une solution comprenant du méthanesulfonate de plomb Pb(CH$_3$SO$_3$)$_2$ à hauteur de 1 M, la quantité maximale de NaF, que l'on peut ajouter à ladite solution, répond, en fonction de la concentration d'acide méthanesulfonique, à la relation suivante :

$$[NaF]_{max}= 0,33*[CH_3SO_3H] - 0,01$$

L'homme du métier pourra également choisir une quantité plus importante que celle utilisée pour éviter la précipitation de fluorure de plomb PbF$_2$. Pour des états de charge faibles de la batterie, il y aura présence d'un précipité de sulfure de plomb, lequel précipité sera redissous pour des états de charge plus importants, grâce à l'acidité générée par les réactions de charge de la batterie au niveau de l'électrode positive.

Les accumulateurs de l'invention sont, avantageusement, des accumulateurs à circulation d'électrolyte, c'est-à-dire des accumulateurs pour lesquels l'électrolyte est renouvelé par circulation par le biais d'un réservoir contenant ledit électrolyte.

Comme mentionné plus haut et comme démontré dans les modes de réalisation particuliers qui suivent, il a été mis en évidence que les ions fluorures dans l'électrolyte spécifique des accumulateurs de l'invention contribuent à améliorer la tenue de la couche de PbO$_2$ présente à la surface de l'électrode positive, ce qui signifie en d'autres termes que cette couche aura tendance à moins se déliter ou pas se déliter du tout sous forme de particules en présence de ces ions fluorures par rapport au cas où l'électrolyte ne contiendrait pas de tels ions.

Ainsi l'invention a trait également à l'utilisation d'ions fluorures dans un électrolyte comprenant de l'acide méthanesulfonique et au moins un sel de plomb pour améliorer la tenue de la couche de PbO$_2$ présente en surface de l'électrode positive d'un accumulateur électrochimique au plomb.

Pour cette utilisation, les caractéristiques spécifiques de l'accumulateur mentionnées ci-dessus sont également valables.

D'autres caractéristiques et avantages de l'invention apparaîtront du complément de description qui suit et qui se rapporte à des modes de réalisation particuliers.

Bien entendu, ce complément de description n'est donné qu'à titre d'illustration de l'invention et n'en constitue en aucun cas une limitation.

**BREVE DESCRIPTION DES FIGURES**

La figure 1 représente une cellule classique d'un accumulateur électrochimique au plomb à circulation d'électrolyte.

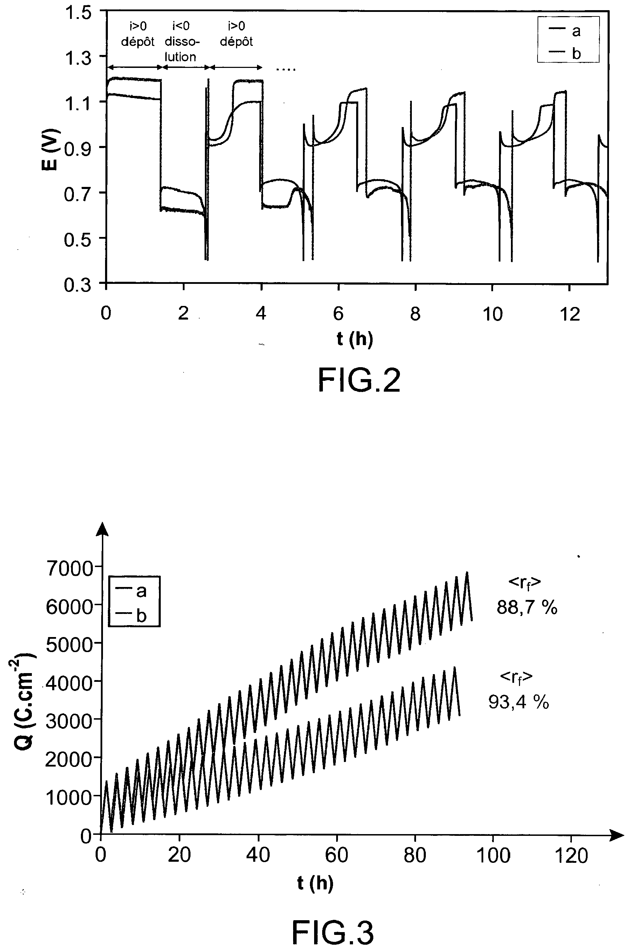

La figure 2 est un graphique illustrant l'évolution du potentiel E (exprimé en V par rapport à Ag/Ag$_2$SO$_4$) de l'électrode de travail en fonction du temps t (en h) pour une densité de courant de 10 mA.cm$^{-2}$ (respectivement une courbe a) pour l'essai avec l'électrolyte sans additif et une courbe b) pour l'essai avec l'électrolyte avec additif) pour l'exemple dont les conditions opératoires sont mentionnées ci-dessous.
La figure 3 est un graphique illustrant l'évolution de la charge Q (en C.cm$^{-2}$) de l'électrode de travail en fonction du temps t (en h) pour une densité de courant de 10 mA.cm$^{-2}$ (respectivement une courbe a) pour l'essai avec l'électrolyte sans additif et une courbe b) pour l'essai avec l'électrolyte avec additif) pour l'exemple dont les conditions opératoires sont mentionnées ci-dessous.

**EXPOSÉ DÉTAILLÉ DE MODES DE RÉALISATION PARTICULIERS**

EXEMPLE 1

Dans cet exemple, les effets du NaF sur le cyclage du dioxyde de plomb ont été estimés, lors d'un premier essai, par rapport à une électrode en carbone (plus spécifiquement, une électrode à disque de carbone vitreux de diamètre 3 mm), jouant le rôle d'électrode de travail dans un dispositif classique à trois électrodes, la contre-électrode étant en platine et l'électrode de référence étant en sulfate d'argent (Ag/Ag$_2$SO4, E°=0,65 V vs. ENH). Lors du cyclage, une couche en dioxyde de plomb PbO$_2$ de 60 $\mu$m d'épaisseur est alternativement déposée puis redissoute sur le disque de l'électrode positive. Ce dispositif est rempli avec environ 30 mL de solution de Pb(CH$_3$SO$_3$)$_2$ 1M + CH$_3$SO$_3$H 0,2M contenant ou non du NaF selon une quantité de 30 mM (qualifié ci-dessous d'additif). La solution est agitée magnétiquement.

Plusieurs cycles galvanostatiques sont appliqués à l'électrode de travail, à savoir que l'on applique un courant alternativement positif (en vue d'une oxydation) et négatif (en vue d'une réduction). Ce dispositif permet de mimer la réaction électrochimique de dépôt/dissolution, qui se produit à l'électrode positive d'une batterie plomb-AMS à circulation d'électrolyte. Pour chaque cycle, le courant négatif de réduction du PbO$_2$ est appliqué, jusqu'à ce que le potentiel chute brusquement, ce qui marque la fin de l'électrodissolution et le commencement d'un nouveau cycle de dépôt/dissolution.

Les réponses en potentiel de l'électrode de travail pendant le cyclage galvanostatique du dioxyde de plomb dans l'électrolyte susmentionné ainsi que dans le même électrolyte dépourvu d'additif sont représentées sur la figure 2 jointe en annexe, illustrant l'évolution du potentiel E (en V par rapport à Ag/Ag$_2$SO$_4$) de l'électrode de travail en fonction du temps t (en h) pour une densité de courant de 10 mA.cm$^{-2}$ (respectivement une courbe a) pour l'essai avec l'électrolyte sans additif et une courbe b) pour l'essai avec l'électrolyte avec additif).

Il apparaît, que le fluorure de sodium influence peu le potentiel d'électrode. De légères surtensions supplémentaires apparaissent en oxydation et en réduction par rapport à l'électrolyte dépourvu d'additif mais cet effet a tendance à se résorber après quelques cycles de dépôt/dissolution. Cela démontre, que l'utilisation de fluorure de sodium dans l'électrolyte de batterie est tout à fait possible.

Qui plus est, alors que le dioxyde de plomb a tendance à se détacher de l'électrode sous forme de poudre noire pendant le cyclage électrodépôt-electrodissolution du dioxyde de plomb en milieu AMS, la présence de NaF dans l'électrolyte a montré son aptitude à stabiliser le dioxyde de plomb sur l'électrode. Plus spécifiquement, pour l'électrode à disque de carbone vitreux, la quantité de NaF nécessaire pour avoir une amélioration significative de la tenue du PbO$_2$ sur de nombreux cycles (quelques dizaines) est d'environ 30 mM. Une solution au problème de détachement du PbO$_2$ de l'électrode positive de la batterie plomb-AMS à circulation peut donc être d'ajouter, dans ce contexte, du NaF (30 mM) à l'électrolyte Pb(CH$_3$SO$_3$)$_2$ + CH$_3$SO$_3$H spécifique susmentionné.

Un deuxième essai a été réalisé dans des conditions similaires à celui du premier essai, si ce n'est que l'électrode de travail est désormais un tube de graphite de diamètre 3 mm et de surface supérieure à 1 cm$^2$. L'électrolyte, en tant que tel, répond aux mêmes spécificités que celui du premier essai, à savoir Pb(CH$_3$SO$_3$)$_2$ 1M + CH$_3$SO$_3$H 0,2 M. Il a été constaté que la quantité de NaF nécessaire pour avoir une amélioration significative de la tenue du PbO$_2$ sur de nombreux cycles (quelques dizaines) doit être supérieure ou égale à 150 mM.

Un troisième essai a été réalisé, consistant à mesurer la quantité cumulée de charges Q (en C.cm$^{-2}$) durant le cyclage de PbO$_2$ en fonction du temps t (en h) dans les mêmes conditions concernant l'électrolyte et le dispositif que celles du premier essai, si ce n'est que l'électrode de travail est, à présent, un tube de graphite d'un diamètre de 3 mm et d'une longueur de 1 cm, lequel tube présente une surface de 1 cm$^2$. Les résultats sont reportés sur la figure 3 jointe en annexe avec une courbe a) pour l'essai réalisé avec l'électrolyte sans additif et une courbe b) pour l'essai réalisé avec l'électrolyte avec additif.

Lors de l'oxydation, pendant le dépôt du PbO$_2$, Q augmente (le courant est positif). A l'inverse, lors de la réduction, pendant la dissolution électrochimique du PbO$_2$, Q diminue, car le courant est de sens opposé. Le rapport entre la quantité de charge passée pendant la phase oxydative (Q$_{ox}$) sur la quantité de charge passée pendant la phase réductive (Q$_{réd}$) donne le rendement faradique (r$_f$) du processus. Celui-ci est inférieur à 1 pour plusieurs raisons :

- d'une part, la réaction de dégagement d'oxygène durant le dépôt de PbO$_2$ consomme une partie de la charge Q$_{ox}$ ;
- d'autre part, la réduction de PbO$_2$ est incomplète, du fait du décrochement de PbO$_2$ dans la solution et des résidus restant sur l'électrode et ne pouvant plus être dissous.

Ainsi, la charge cumulée ne revient jamais à zéro mais croît au fur et à mesure des cycles et ce, d'autant plus vite que le rendement faradique rf est faible. L'effet du NaF est clairement positif sur le rendement faradique du processus de dépôt/dissolution du PbO$_2$. Sans additif, le rendement faradique est d'environ 89% (plus précisément, 88,7%), alors qu'avec la présence de NaF, il passe à plus de 93% (plus précisément, 93,4%).

En conclusion, en transposant ces résultats, et notamment ceux du deuxième essai, à un accumulateur au plomb en tant que tel conforme à l'invention avec une électrode positive présentant une surface supérieure à 1 cm$^2$, on pourrait utiliser un électrolyte présentant une concentration en acide méthanesulfonique supérieure supérieure à 0,5 M avec une concentration en NaF de 150 mM pour permettre la solubilisation complète des ions fluorures sans précipitation du fluorure de plomb. Cette variante présente l'avantage d'avoir une grande quantité d'ions fluorures en solution tout en évitant la présence de particules de PbF$_2$ solides dans l'électrolyte.

De manière alternative, on pourrait utiliser un électrolyte peu concentré en acide (par exemple, une concentration en acide inférieure à 0,2 M) dans une cellule à l'état déchargé en ajoutant une quantité importante de NaF (par exemple, 150 mM). Il y aura alors un phénomène de précipitation du PbF$_2$ pour des faibles états de charge de la cellule, pour lesquels l'électrolyte est faiblement concentré en acide. Toutefois, la charge de la batterie et l'augmentation de l'acidité, qui en est la conséquence, permettra la ressolubilisation du PbF$_2$ (notamment lorsque [H$^+$] est supérieure à 0,5 M), donc l'augmentation de la concentration en ions F$^-$ dans la solution et l'élimination des particules solides en suspension.

Compte tenu de l'augmentation irrépressible de l'acidité de l'électrolyte, au cours du cyclage de la batterie Pb-AMS, liée à l'accumulation des dépôts de plomb et de dioxyde de plomb aux électrodes, cette alternative permet de ne pas surcharger davantage l'électrolyte en acide.

## Revendications

1. Accumulateur électrochimique au plomb comprenant au moins une cellule électrochimique comprenant une électrode positive comprenant de l'oxyde de plomb PbO$_2$ et une électrode négative comprenant du plomb métallique séparées par un électrolyte comprenant de l'acide méthanesulfonique et au moins un sel de plomb, **caractérisé en ce que** ledit l'électrolyte comprend, en outre, des ions fluorures.

2. Accumulateur électrochimique au plomb selon la revendication 1, dans lequel l'électrode positive et l'électrode négative sont toutes deux, des électrodes comprenant un substrat, dont au moins une partie de sa surface est recouverte d'une couche de plomb métallique pour l'électrode négative et d'une couche d'oxyde de plomb PbO$_2$ pour l'électrode positive.

3. Accumulateur électrochimique au plomb selon la revendication 2, dans lequel le substrat est un substrat carboné en un matériau carboné choisi parmi le carbone vitreux, le graphite et les mélanges de ceux-ci.

4. Accumulateur électrochimique au plomb selon l'une quelconque des revendications précédentes, dans lequel le sel de plomb est du méthanesulfonate de plomb Pb(CH$_3$SO$_3$)$_2$.

5. Accumulateur électrochimique au plomb selon la revendication 4, dans lequel le sel de plomb est incorporé dans l'acide méthanesulfonique à une teneur allant jusqu'à 2 M.

6. Accumulateur électrochimique au plomb selon l'une quelconque des revendications précédentes, dans lequel les ions fluorures sont issus d'un sel fluorure d'élément alcalin.

7. Accumulateur électrochimique au plomb selon l'une quelconque des revendications précédentes, dans lequel les ions fluorures sont issus du fluorure de sodium.

8. Accumulateur électrochimique au plomb selon l'une quelconque des revendications précédentes, qui est un accumulateur à circulation d'électrolyte.

9. Utilisation d'ions fluorures dans un électrolyte comprenant de l'acide méthanesulfonique et au moins un sel de plomb pour améliorer la tenue de la couche de PbO$_2$ présente en surface de l'électrode positive d'un accumulateur électrochimique au plomb.

## Patentansprüche

1. Elektrochemischer Bleiakkumulator, umfassend wenigstens eine elektrochemische Zelle, umfassend eine positive Elektrode, die Bleioxid PbO$_2$ enthält, sowie eine negative Elektrode, die metallisches Blei enthält, welche durch einen Elektrolyten separiert sind, der Methansulfonsäure und wenigstens ein Bleisalz enthält, **dadurch gekennzeichnet, dass** der Elektrolyt ferner Fluoridionen enthält.

**2.** Elektrochemischer Bleiakkumulator nach Anspruch 1, bei dem die positive Elektrode und die negative Elektrode beide Elektroden sind, die ein Substrat umfassen, wovon die Oberfläche wenigstens teilweise mit einer metallischen Bleischicht für die negative Elektrode und mit einer Schicht aus Bleioxid $PbO_2$ für die positive Elektrode bedeckt ist.

**3.** Elektrochemischer Bleiakkumulator nach Anspruch 2, bei dem das Substrat ein Substrat ist, das mit einem kohlenstoffhaltigen Material karbonisiert ist, ausgewählt aus Glaskohlenstoff, Graphit und deren Mischungen.

**4.** Elektrochemischer Bleiakkumulator nach einem der vorhergehenden Ansprüche, bei dem das Bleisalz Bleimethansulfonat $Pb(CH_3SO_3)_2$ ist.

**5.** Elektrochemischer Bleiakkumulator nach Anspruch 4, bei dem das Bleisalz in die Methansulfonsäure mit einem Gehalt eingebracht ist, der bis zu 2 M reicht.

**6.** Elektrochemischer Bleiakkumulator nach einem der vorhergehenden Ansprüche, bei dem die Fluoridionen aus einem Alkalielement-Fluoridsalz stammen.

**7.** Elektrochemischer Bleiakkumulator nach einem der vorhergehenden Ansprüche, bei dem die Fluoridionen aus Natriumfluorid stammen.

**8.** Elektrochemischer Bleiakkumulator nach einem der vorhergehenden Ansprüche, der ein Akkumulator mit Elektrolytzirkulation ist.

**9.** Verwendung von Fluoridionen in einem Elektrolyten, der Methansulfonsäure sowie wenigstens ein Bleisalz enthält, um die Festigkeit der $PbO_2$-Schicht zu verbessern, die an der Oberfläche der positiven Elektrode eines elektrochemischen Bleiakkumulators vorhanden ist.

**Claims**

**1.** An electrochemical lead battery comprising at least one electrochemical cell comprising a positive electrode comprising lead oxide $PbO_2$ and a negative electrode comprising lead metal separated by an electrolyte comprising methanesulfonic acid and at least one lead salt, **characterized in that** said electrolyte further comprises fluoride ions.

**2.** The electrochemical lead battery according to claim 1, wherein the positive electrode and the negative electrode are both electrodes comprising a substrate, for which at least one portion of its surface is covered with a lead metal layer for the negative electrode and a lead oxide layer $PbO_2$ for the positive electrode.

**3.** The electrochemical lead battery according to claim 2, wherein the substrate is a carbonaceous substrate in a carbonaceous material selected from glassy carbon, graphite and mixtures thereof.

**4.** The electrochemical lead battery according to any of the preceding claims, wherein the lead salt is lead methanesulfonate $Pb(CH_3SO_3)_2$.

**5.** The electrochemical lead battery according to claim 4, wherein the lead salt is incorporated into the methanesulfonic acid at a content ranging up to 2 M.

**6.** The electrochemical lead battery according to any of the preceding claims, wherein the fluoride ions are derived from a fluoride salt of an alkaline element.

**7.** The electrochemical lead battery according to any of the preceding claims, wherein the fluoride ions are derived from sodium fluoride.

**8.** The electrochemical lead battery according to any of the preceding claims, which is a battery with circulation of electrolyte.

**9.** The use of fluoride ions in an electrolyte comprising methanesulfonic acid and at least one lead salt for improving the strength of the $PbO_2$ layer present at the surface of the positive electrode of an electrochemical lead battery.

FIG.1

FIG.2

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **HAZZA et al.** *Phys.Chem. Chem. Phys.,* 2004, vol. 6, 1773

- **PLETCHER et al.** *J.Power Sources,* 2008, vol. 180, 621